# EUROPÄISCHE PATENTSCHRIFT

(11) **EP 4 627 231 B1**
(45) Veröffentlichungstag und Bekanntmachung des Hinweises auf die Patenterteilung: **01.07.2026**
(21) Anmeldenummer: 23813333.4
(22) Anmeldetag: 23.11.2023
(51) Int. Cl.: F16H 57/04

(54) **VERFAHREN ZUM ERMITTELN VON ZUMINDEST EINEM VOLUMENSTROM IN EINER VORRICHTUNG FÜR EIN HYDRAULISCHES SYSTEM, COMPUTERPROGRAMMPRODUKT, COMPUTEREINRICHTUNG**
METHOD FOR DETERMINING AT LEAST ONE VOLUME FLOW RATE IN AN APPARATUS FOR A HYDRAULIC SYSTEM, COMPUTER PROGRAM PRODUCT, AND COMPUTER DEVICE
PROCÉDÉ DE DÉTERMINATION D'AU MOINS UN DÉBIT VOLUMIQUE DANS UN APPAREIL POUR UN SYSTÈME HYDRAULIQUE, PRODUIT-PROGRAMME INFORMATIQUE ET DISPOSITIF INFORMATIQUE

(30) Priorität: 29.11.2022 DE 102022131629
(43) Veröffentlichungstag der Anmeldung: 08.10.2025
(73) Patentinhaber: AUDI Aktiengesellschaft, 85057 Ingolstadt (DE)
(72) Erfinder: JONUSCHEIT, Michael, 90402 Nürnberg (DE); PSCHERWOK, Jochen, 85072 Eichstätt (DE); AMMLER, Stefan, 86673 Bergheim (DE); SCHULLER, Dietmar, 93336 Altmannstein (DE)
(74) Vertreter: Gleiss Große Schrell und Partner mbB
(86) Internationale Anmeldenummer: PCT/EP2023/082792
(87) Internationale Veröffentlichungsnummer: WO 2024/115256

(56) Entgegenhaltungen:
- CN-A- 110 285 211
- DE-A1- 10 030 838
- DE-A1- 19 813 982

## Beschreibung

Die Erfindung betrifft ein Verfahren zum Ermitteln von zumindest einem Volumenstrom in einer Vorrichtung für ein hydraulisches System. Außerdem betrifft die Erfindung ein Computerprogrammprodukt zum Durchführen des Verfahrens.

Aus dem Stand der Technik sind hydraulische Systeme für Antriebsmodule von Kraftfahrzeugen bekannt, die über Hydraulikkreisläufe zum Kühlen und/oder Schmieren von Kupplungen und Antriebsmaschinen verfügen. Insbesondere sind Antriebsmodule für Hybridfahrzeuge bekannt, die eine Brennkraftmaschine und eine elektrische Maschine zum wahlweisen Antrieb des Kraftfahrzeugs aufweisen. Derartige Antriebsmodule weisen üblicherweise jeweils Kupplungen zum Trennen und Verbinden der elektrischen Maschine der Brennkraftmaschine mit einem Antriebsstrang des Kraftfahrzeugs auf. Zum Kühlen und Schmieren der Kupplungen und der elektrischen Maschine selbst wird Kühl- und Schmieröl benötigt, das in Kühlkreisläufen zirkuliert. Das Antriebsmodul weist dabei üblicherweise separate Kühlkreisläufe für die Kupplungen auf, wobei zumindest der der elektrischen Maschine zugeordneten Kupplung und der oder den der Brennkraftmaschine zugeordneten Kupplungen jeweils eine, üblicherweise elektromotorisch angetriebene Pumpe zum Einstellen eines Kühlmedienstroms zugeordnet ist. Die zumindest zwei Pumpen werden üblicherweise über ein Steuergerät angesteuert, wobei der Kühlmedienstrom insbesondere in Abhängigkeit von der Drehzahl der Pumpen eingestellt wird.

Die Druckschrift CN 110 285 211 A betrifft ein Schmiersystem für eine Kohlebergbaumaschine. Das Schmiersystem weist einen Öleinlasskanal und einen Ölrücklaufkanal auf, wobei der Öleinlasskanal einen Öltank, eine Hydraulikpumpe, ein Umkehrventil, ein Drosselventil und Ölleitungen aufweist, wobei der Öltank, die Hydraulikpumpe, das Umkehrventil und das Drosselventil über die Ölleitungen nacheinander verbunden sind, und wobei die Hydraulikpumpe, das Umkehrventil und das Drosselventil in dem Öltank angeordnet sind.

Aus dem Stand der Technik sind weiterhin die Druckschriften DE 198 13 982 A1 und DE 100 30 838 A1 bekannt.

Der Erfindung liegt die Aufgabe zugrunde, ein Verfahren zum Ermitteln von zumindest einem Volumenstrom in einer Vorrichtung für ein verbessertes hydraulisches System zu schaffen, das eine verringerte Komplexität aufweist.

Die der Erfindung zugrunde liegende Aufgabe wird durch ein Verfahren mit den Merkmalen des Anspruchs 1 gelöst. Es ist eine Vorrichtung vorgesehen, mit einer ersten Hydraulikleitung, die mit einer, insbesondere zumindest eine Pumpe aufweisenden, Hydraulikdruckquelle zum Fördern eines flüssigen Mediums aus einem Reservoir einerseits und mit zumindest einer zu kühlenden und/oder zu schmierenden Einrichtung andererseits verbunden ist, wobei der ersten Hydraulikleitung ein Druckbegrenzungsventil zugeordnet ist, das einen Tankanschluss zu dem Reservoir für das flüssige Medium aufweist und die erste Hydraulikleitung mit dem Tankanschluss verbindet, wenn ein Hydraulikdruck in der ersten Hydraulikleitung einen vorgegebenen Grenzwert überschreitet, wobei stromabwärts von dem Druckbegrenzungsventil eine Blende in der ersten Hydraulikleitung angeordnet ist, und wobei stromabwärts von der Blende eine Drossel in der ersten Hydraulikleitung angeordnet oder ausgebildet ist. Es sind folgende Verfahrensschritte vorgesehen: Ermitteln einer Temperatur des Mediums in dem Reservoir, Ermitteln eines durch die Hydraulikdruckquelle geförderten Gesamtvolumenstroms in der ersten Hydraulikleitung in Abhängigkeit von der Temperatur, Ermitteln eines durch das Druckbegrenzungsventil in das Reservoir abgegebenen ersten Teilvolumenstroms, und Ermitteln eines zweiten Teilvolumenstroms durch die Blende und die Drossel zu der Einrichtung als eine Differenz von Gesamtvolumenstrom und erstem Teilvolumenstrom. Durch das Verfahren ist eine besonders vorteilhafte einfache Möglichkeit zum Ermitteln eines Teilvolumenstroms des flüssigen Mediums zu der Einrichtung geschaffen, die lediglich von den Eingangsgrößen der Temperatur des Mediums, des geförderten Gesamtvolumenstroms und des in das Reservoir abgegebenen Teilvolumenstroms abhängt. Durch die Kombination und Anordnung von Druckbegrenzungsventil, Blende und Drossel ist nämlich eine vorteilhafte Abhängigkeit des Volumenstroms eines durch die erste Hydraulikleitung fließenden Mediums zu der Einrichtung von einer Temperatur des Mediums erreicht. Das erfindungsgemäße Verfahren dient dazu, diese Abhängigkeit zu modellieren. Durch das Druckbegrenzungsventil ist der zweite Teilvolumenstrom bedarfsgerecht begrenzt. Ist der Gesamtvolumenstrom zu groß, wird überschüssiges Medium als erster Teilvolumenstrom direkt in das Reservoir zurückgeführt. Aus der Kombination eines Druckbegrenzungsventils mit möglichst konstantem Öffnungsdruck vor einer Blende und einem temperaturabhängigen Rückstaudruck aus der Folgestrecke nach der Blende in Richtung der Drossel ergibt sich ein von der Temperatur abhängiger Differenzdruck an der Blende und damit ein temperaturabhängiger zweiter Teilvolumenstrom zu der Einrichtung, sodass eine temperaturabhängige Versorgung der Einrichtung erreicht ist. Gemeinsam mit der Drossel sind das Druckbegrenzungsventil und die Blende also dazu ausgebildet, den zweiten Teilvolumenstrom in Abhängigkeit von der Temperatur des Mediums einzustellen. Die temperaturabhängige Versorgung der Einrichtung funktioniert beispielsweise wie folgt: der Volumenstrom durch die ideale Blende ist unabhängig von der Viskosität des Mediums und wird lediglich durch die Geometrie der Blende, insbesondere deren Durchmesser, bestimmt. Ist die reale Blende möglichst dünnwandig ausgebildet, entspricht ihr Verhalten dem der idealen Blende zumindest weitgehend. Hingegen ist der Volumenstrom durch die Drossel nicht nur abhängig von der Geometrie der Drosselstrecke, sondern auch stark abhängig von der Viskosität des Mediums bei gleichem Druck vor der Drossel. Je kälter das Medium, desto höher die Viskosität und desto geringer der Volumenstrom durch die Drossel. Bei niedrigen Temperaturen fließt der Einrichtung also weniger Medium zu als bei hohen Temperaturen. Daneben ist der zweite Teilvolumenstrom lediglich von einem Auslösedruck des Druckbegrenzungsventils abhängig. Der vorteilhafte Effekt, also ein temperatur- und damit viskositätsabhängiger Medienstrom ergibt sich durch die Anordnung der drei Bauteile automatisch. Die Geometrie von Blende und Drossel sowie der Auslösedruck des Druckbegrenzungsventils sind bevorzugt derart aufeinander abgestimmt, dass der Einrichtung ein vorgegebener, temperaturabhängiger Medienstrom zugeführt wird. Der Blendendurchmesser ist insbesondere derart gewählt, dass bei heißem Medium, beispielsweise 100 °C, ein zum Kühlen ausreichend hoher Volumenstrom zugeführt wird. Die Drosselstrecke lässt gleichzeitig bei kaltem Medium, beispielsweise -30 °C, nur einen kleinen Volumenstrom zu, der gerade noch eine Schmierung erlaubt. Der Auslösedruck des Druckbegrenzungsventils ist bevorzugt so klein wie möglich gewählt oder derart minimiert, dass das Druckbegrenzungsventil gerade noch robust funktioniert, um beispielsweise den Energiebedarf einer Medienquelle möglichst niedrig zu halten. Für die entsprechende Abstimmung und Optimierung von Drosselstrecke, Blende und Auslösedruck werden insbesondere entsprechende Simulationen und Modellrechnungen durchgeführt.

Besonders bevorzugt ist vorgesehen, dass die Hydraulikdruckquelle zumindest eine Pumpe aufweist, und dass der Gesamtvolumenstrom als Produkt aus einem von der Temperatur abhängigen volumetrischen Wirkungsgrad, einer Antriebsdrehzahl und einem Hubvolumen der Pumpe ermittelt wird. Dadurch ist eine besonders einfache Möglichkeit zum Ermitteln des Gesamtvolumenstroms geschaffen.

Gemäß einer bevorzugten Weiterbildung der Erfindung ist vorgesehen, dass eine Vielzahl an Gesamtvolumenströmen durch eine Vielzahl an Antriebsdrehzahlen vorgegeben werden. Durch die Antriebsdrehzahl ist eine besonders einfache Möglichkeit zum Variieren des Gesamtvolumenstroms geschaffen, sodass diese eine vorteilhafte Kenngröße darstellt.

Besonders bevorzugt ist vorgesehen, dass für eine Vielzahl an Temperaturen und/oder Antriebsdrehzahlen jeweils zulässige Wertebereiche vorgegeben werden. Dadurch ist besonders vorteilhaft sichergestellt, dass das Kennfeld nur die gewünschten, insbesondere in einem späteren Betrieb der Vorrichtung beziehungsweise des hydraulischen Systems zu erwartenden, Werte enthält. Beispielsweise wird ein zulässiger Wertebereich für die Temperatur vorgegeben, der einem zu erwartenden oder bauteilbedingt erlaubten Betriebstemperaturbereich der Vorrichtung entspricht, insbesondere von -30 °C bis +140 °C. Weiter bevorzugt werden eine Auflösung, beispielsweise 1 °C, und ein Abstand der zu betrachtenden Temperaturwerte voneinander, beispielsweise 10 °C, oder eine Vielzahl von zu betrachtenden Temperaturwerten vorgegeben und für alle entsprechenden Temperaturwerte innerhalb dieses Wertebereichs mit der vorgegebenen Auflösung das erfindungsgemäße Verfahren durchgeführt. Insbesondere wird ein zulässiger Wertebereich für die Antriebsdrehzahl in Abhängigkeit von einem technisch möglichen Wertebereich für die entsprechende Pumpe gewählt. Alternativ wird ein zulässiger Wertebereich für die sich aus den zulässigen Antriebsdrehzahlen theoretisch ergebenden Gesamtvolumenströme gewählt, insbesondere von 0 l/min bis 30 l/min. Weiter bevorzugt werden auch hier eine Auflösung, beispielsweise 0,1 l/min, und ein Abstand der zu betrachtenden Werte voneinander, beispielsweise 0,5 l/min oder eine Vielzahl von zu betrachtenden Werten vorgegeben und für alle Werte innerhalb dieses Wertebereichs das erfindungsgemäße Verfahren durchgeführt. Insbesondere wird das Verfahren für alle derart festgelegten oder möglichen Kombinationen aus Temperaturwerten und Antriebsdrehzahl- oder Gesamtvolumenstromwerten durchgeführt.

Gemäß einer bevorzugten Weiterbildung der Erfindung ist vorgesehen, dass die Hydraulikdruckquelle eine zweite Pumpe fluidtechnisch parallel zu der ersten Pumpe aufweist, und dass der Gesamtvolumenstrom als Summe der jeweiligen Produkte aus volumetrischem Wirkungsgrad, Antriebsdrehzahl und Hubvolumen der jeweiligen Pumpe ermittelt wird. Dadurch ist eine besonders einfache Möglichkeit zum Ermitteln des Gesamtvolumenstroms geschaffen, wenn die Hydraulikdruckquelle mehr als eine Pumpe aufweist.

Besonders bevorzugt ist vorgesehen, dass der erste Teilvolumenstrom in Abhängigkeit von einer Veränderung eines Füllstands des Reservoirs ermittelt wird. Dadurch ist eine besonders einfache Möglichkeit zum Ermitteln des ersten Teilvolumenstroms geschaffen. Beispielsweise wird der Füllstand durch einen dem Reservoir zugeordneten Füllstandsensor ermittelt.

Gemäß einer bevorzugten Weiterbildung der Erfindung ist vorgesehen, dass eine Temperatur der Einrichtung in Abhängigkeit von dem zweiten Teilvolumenstrom und einer elektrischen oder mechanischen Leistungsabgabe der Einrichtung ermittelt wird. Dadurch ist eine besonders vorteilhaft einfache Möglichkeit geschaffen, zu prüfen, ob bei dem gewählten oder gegebenen Betriebspunkt aus Gesamtvolumenstrom und Temperatur die Temperatur der Einrichtung innerhalb eines zulässigen Betriebstemperaturbereiches liegt, also insbesondere, ob die Einrichtung ausreichend gekühlt wird.

Das erfindungsgemäße Computerprogrammprodukt zur Ausführung auf einer Computereinrichtung mit den Merkmalen des Anspruchs 8 zeichnet sich dadurch aus, dass es bei bestimmungsgemäßem Gebrauch das erfindungsgemäße Verfahren ausführt. Es ergeben sich hierdurch die bereits genannten Vorteile.

Weitere Vorteile ergeben sich insbesondere aus dem zuvor Beschriebenen sowie aus den Ansprüchen. Im Folgenden soll die Erfindung anhand der Zeichnungen näher erläutert werden. Dazu zeigen
- Figur 1: einen Schaltplan eines vorteilhaften hydraulischen Systems,
- Figur 2: eine Detailansicht des hydraulischen Systems, und
- Figur 3: ein vorteilhaftes Verfahren nach der Erfindung zum Ermitteln von zumindest einem Volumenstrom in dem hydraulischen System.

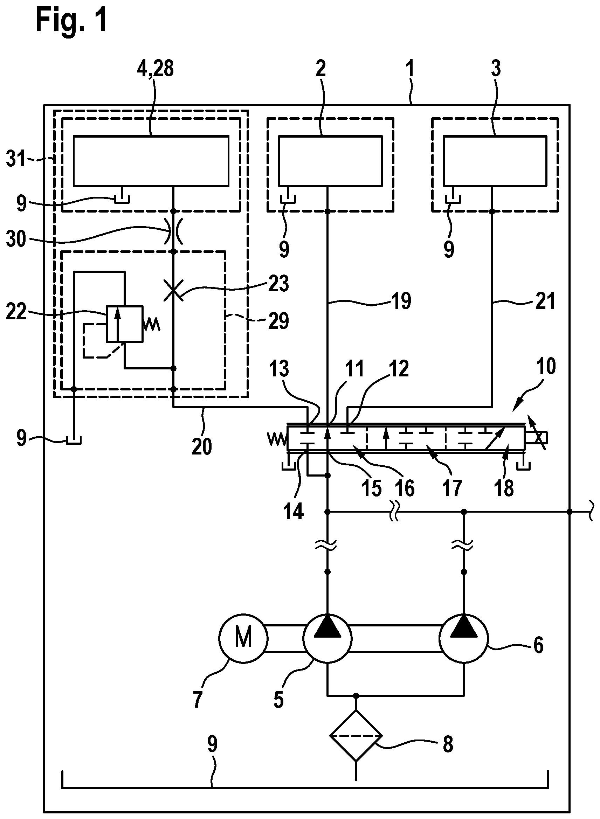

Die Figur 1 zeigt einen Schaltplan eines vorteilhaften hydraulischen Systems 1, das zum Einsatz in einem Antriebsmodul eines Kraftfahrzeugs ausgebildet ist. Das hydraulische System 1 weist eine erste Kupplung 2, eine zweite Kupplung 3 und eine dritte Kupplung 4 auf.

Die erste Kupplung 2 und die zweite Kupplung 3 sind einer nicht dargestellten ersten Antriebsmaschine, insbesondere Brennkraftmaschine, und die dritte Kupplung 4 einer zweiten Antriebsmaschine 28, insbesondere elektrischen Maschine, zugeordnet, um diese wahlweise mit einem Getriebe des Kraftfahrzeugs zu koppeln.

Das hydraulische System 1 weist außerdem einen gemeinsamen Hydraulikkreislauf zum Kühlen und/oder Schmieren zumindest der Kupplungen 2, 3, 4 und der zweiten Antriebsmaschine 28 auf. Der Hydraulikkreislauf weist dabei eine Pumpe 5 zum Fördern eines flüssigen Mediums auf. Außerdem ist eine weitere Pumpe 6 vorgesehen, die jedoch optional ist, und vorliegend dafür vorgesehen ist, weitere, nicht dargestellte Komponenten des Kraftfahrzeugs mit Medium zu versorgen.

Die beiden Pumpen 5, 6 sind auf einer gemeinsamen Welle angeordnet, die von einem Elektromotor 7 angetrieben wird. Der Elektromotor 7 ist bevorzugt drehzahlgeregelt, sodass die Förderleistung der Pumpen 5, 6 und der jeweilige Kühlmedienstrom von der Drehzahl des Elektromotors 7 abhängig ist.

Die beiden Pumpen 5, 6 sind unter Zwischenschaltung eines Saugfilters 8 mit einem Tank oder Reservoir 9 verbunden, das als Vorratsbehälter oder Sumpf für das Medium dient, und in dem das Medium vorzugsweise drucklos gespeichert ist.

Weiter weist der Hydraulikkreislauf ein zwischen den Kupplung 2, 3, 4 und der Pumpe 5 zwischengeschaltetes und ansteuerbares Ventil 10 zum Einstellen eines Kühlmedienstroms zumindest für die Kupplungen 2, 3, 4 und die zweite Antriebsmaschine auf.

Das Ventil 10 ist vorliegend als elektrisch betätigbares 5/3-Wegeventil mit drei Ausgängen 11, 12, 13 und zwei Eingängen 14, 15 ausgebildet. Dabei ist ein erster Ausgang 11 der ersten Kupplung 2, ein zweiter Ausgang 12 der zweiten Kupplung 3, und ein dritter Ausgang 13 der dritten Kupplung 4 zugeordnet. Ein erster Eingang 14 und ein zweiter Eingang 15 sind beide der Pumpe 5 zugeordnet. Gemäß einem nicht dargestellten Ausführungsbeispiel ist nur ein Eingang vorgesehen, der der Pumpe 5 zugeordnet ist. Das Ventil 10 ist dann als 4/3-Wegeventil ausgebildet.

Das Ventil 10 weist also drei mögliche Schaltstellungen 16, 17, 18 auf. In einer ersten Schaltstellung 16 des Ventils 10 durchströmt das Medium von dem zweiten Eingang 15 zu dem ersten Ausgang 11 eine zweite Hydraulikleitung 19 nur zu der ersten Kupplung 2.

In einer zweiten Schaltstellung 17 des Ventils 10 durchströmt das Medium von dem ersten Eingang 14 zu dem dritten Ausgang 13 eine erste Hydraulikleitung 20 nur zunächst zu der dritten Kupplung 4 und anschließend zu der zweiten Antriebsmaschine 28. Es ist also vorgesehen, dass das Medium sowohl die dritte Kupplung 4 als auch die zweite Antriebsmaschine 28 durchströmt.

Dazu sind beispielsweise Leitbleche und Querschnittsveränderungen zum Aufteilen und Führen des Kühlmedienstroms vorgesehen. So wird insbesondere zunächst die dritte Kupplung 4 mit einem Teil des Kühlmedienstroms bereichsweise durchströmt, und anschließend die zweite Antriebsmaschine 28.

Ein Teil des Kühlmedienstroms wird insbesondere abgezweigt und nur der zweiten Antriebsmaschine 28 zugeführt, sodass der dritten Kupplung 4 und der zweiten Antriebsmaschine 28 Medium bedarfsweise zugeführt wird.

In einer dritten Schaltstellung 18 des Ventils 10 durchströmt das Medium von dem zweiten Eingang 15 zu dem zweiten Ausgang 12 eine dritte Hydraulikleitung 21 nur zu der zweiten Kupplung 3.

Nachdem das Medium jeweils die Kupplungen 2, 3, 4 sowie die zweite Antriebsmaschine 28 durchströmt hat, wird es zurück in das Reservoir 9 geführt, wie in der Figur 1 angedeutet.

In der ersten Hydraulikleitung 20 sind stromabwärts, also in Richtung der dritten Kupplung 4 und der zweiten Antriebsmaschine 28 zunächst ein Druckbegrenzungsventil 22 und anschließend eine Blende 23 als ein Modul 29 angeordnet. Schließlich ist weiter stromabwärts eine durch zu der Kupplung 4 und der zweiten Antriebsmaschine 28 führende Hydraulikleitungen gebildete Drossel 30 angeordnet.

Das Druckbegrenzungsventil 22, die Blende 23 und die Drossel 30 sind Bestandteile einer vorteilhaften Vorrichtung 31 des hydraulischen Systems 1 und als solche dazu ausgebildet, den Volumenstrom des Mediums zu der dritten Kupplung 4 in Abhängigkeit von einer Temperatur des Mediums einzustellen, wie eingangs beschrieben. Das Druckbegrenzungsventil 22 führt überschüssiges Medium wiederum in das Reservoir 9 ab und ist vorliegend als Sitzventil ausgebildet.

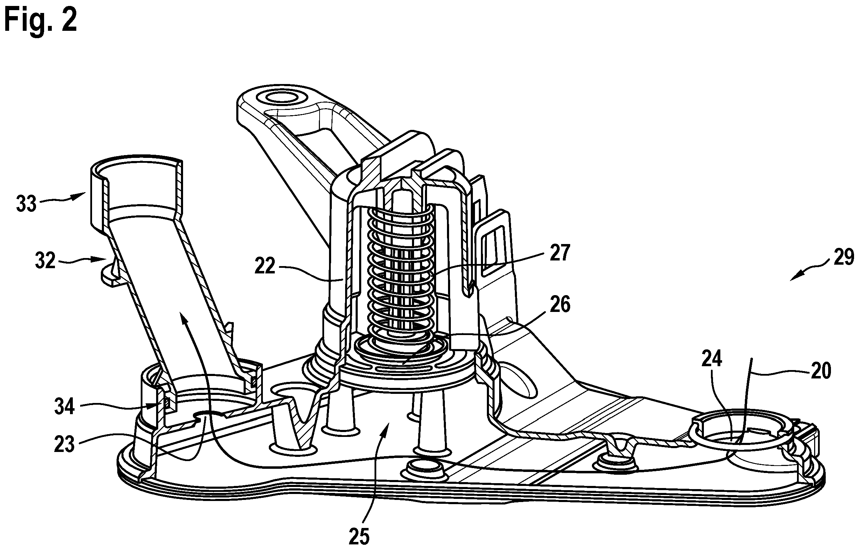

Die Figur 2 zeigt eine Detailansicht des Moduls 29 in dem zweiten Strömungspfad 20, dessen Strömungsrichtung durch einen Pfeil angedeutet ist. Das Medium strömt durch eine Einlassöffnung 24 in einen Bereich 25 hinein. Oberhalb des Bereichs 25 sitzt das als Sitzventil ausgebildete Druckbegrenzungsventil 22.

Ein Ventilteller 26 des Druckbegrenzungsventils 22 schließt den Bereich 25 dichtend ab, solange die Kraft, die aus dem durch das Medium auf den Ventilteller 26 ausgeübten Druck resultiert, kleiner ist als die durch die Federkraft eines Federelements 27, das auf der dem Bereich 25 abgewandten Seite des Ventiltellers 26 angeordnet ist, auf den Ventilteller ausgeübte Kraft.

Ist der durch das Medium ausgeübte Druck größer als der durch das Federelement 27 entsprechend der Federkraft ausgeübte Druck, wird der Ventilteller verlagert, sodass überschüssiges Medium durch die so entstandene Öffnung in das Druckbegrenzungsventil 22 strömt, das strömungstechnisch wiederum an das Reservoir 9 angeschlossen ist, wie vorstehend beschrieben, sodass das Medium zurück in der Reservoir 9 strömt.

Weiter entlang des zweiten Strömungspfads 20 ist die Blende 23 erkennbar. Diese weist vorliegend einen konstanten Strömungsquerschnitt auf und dient als Auslassöffnung für das Medium aus dem Bereich 25.

Stromabwärts der Blende 23 ist dabei vorliegend ein rohrförmiges Adapterelement 32 als Teil der Drossel 30 in der ersten Hydraulikleitung 20 angeordnet, wobei das Adapterelement 32 die Vorrichtung 31 mit den zu der Kupplung 4 und der zweiten Antriebsmaschine 28 führenden Hydraulikleitungen fluidtechnisch verbindet.

Das Adapterelement 32 weist dabei ein der Blende 23 zugeordnetes erstes offenes Ende 33 mit einem ersten Querschnitt und ein den Hydraulikleitungen zugeordnetes zweites offenes Ende 34 mit einem zweiten Querschnitt auf. Vorliegend ist der zweite Querschnitt kleiner als der erste Querschnitt. Das Adapterelement 32 weist vorliegend entlang seiner Längserstreckung, also entlang der Strömungsrichtung, einen sich kontinuierlich verkleinernden Querschnitt auf, ist also konusförmig ausgebildet.

Durch geeignete Wahl des zweiten Querschnitts und der geometrischen Ausbildung des Adapterelements 32 ist zum einen eine vorteilhaft einfache Anpassung des Vorrichtung 31 an Hydraulikleitungen mit entsprechenden Querschnitten gewährleistet und zum anderen eine vorteilhafte zusätzliche Beeinflussungsmöglichkeit einer Drosselstrecke und damit der Eigenschaften der Drossel 30 geschaffen. Die Drossel 30 ist also vorteilhaft an den Kühl- und/oder Schmierbedarf der Kupplung 4 und der zweiten Antriebsmaschine 28 anpassbar.

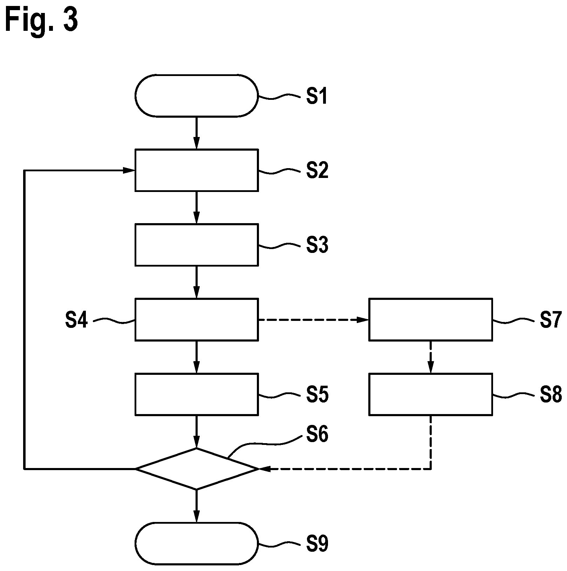

Schließlich zeigt die Figur 3 noch ein vorteilhaftes Verfahren zum Ermitteln von zumindest einem Volumenstrom in dem hydraulischen System 1. Das Verfahren beginnt mit einem Schritt S1. In dem Schritt S1 werden jeweils zulässige Wertebereiche für eine Temperatur des Mediums sowie für Antriebsdrehzahlen zumindest einer der Pumpen 5, 6 sowie entsprechende Wertepaare vorgegeben. Die Verfahrensschritte S2 bis S5 werden für eine Vielzahl von Temperaturen und Antriebsdrehzahlen innerhalb der Wertebereiche durchgeführt, wie im Folgenden erläutert wird.

In einem Schritt S2 wird zunächst eine Temperatur des Mediums in dem Reservoir 9 ermittelt. Anschließend wird ein durch die Pumpe 5, 6 geförderter Gesamtvolumenstrom in der ersten Hydraulikleitung 20 in Abhängigkeit von der Temperatur ermittelt. Der Gesamtvolumenstrom wird dabei als Produkt aus einem von der Temperatur abhängigen volumetrischen Wirkungsgrad, einer Antriebsdrehzahl und einem Hubvolumen der Pumpe 5, 6 ermittelt. Werden beide Pumpen 5, 6 betrachtet, wird der Gesamtvolumenstrom als Summe der jeweiligen Produkte ermittelt.

In einem Schritt S3 wird ein durch das Druckbegrenzungsventil 22 in das Reservoir 9 abgegebener erster Teilvolumenstrom ermittelt. Dieser wird in Abhängigkeit von einer Veränderung eines Füllstands des Reservoirs 9, beispielsweise mithilfe eines entsprechenden Sensors, ermittelt.

In einem Schritt S4 wird ein zweiter Teilvolumenstrom durch die Blende 23 und die Drossel 30 zu der Einrichtung als eine Differenz von Gesamtvolumenstrom und erstem Teilvolumenstrom ermittelt. Dieser wird in einem Schritt S5 in einem entsprechenden Kennfeld abgelegt.

Von dem Schritt S4 ausgehend wird in einem optionalen Schritt S7 eine Temperatur der Einrichtung in Abhängigkeit von dem zweiten Teilvolumenstrom und einer elektrischen oder mechanischen Leistungsabgabe der Einrichtung ermittelt. Diese wird in einem Schritt S8 in einem entsprechenden Kennfeld abgelegt.

In einem auf die Schritte S5 und S8 folgenden Schritt S6 wird geprüft, ob für alle vorgegebenen Wertepaare für die Temperatur und die Antriebsdrehzahlen innerhalb der zulässigen Wertebereiche jeweils ein zweiter Teilvolumenstrom berechnet wurde.

Ist dies nicht der Fall, so springt das Verfahren in den Schritt S2 zurück, in dem dann zumindest einer der Parameter entsprechend verändert wird, beispielsweise die Antriebsdrehzahl oder die Temperatur erhöht oder verringert. Der erste Teilvolumenstrom wird dabei insbesondere empirisch, durch ein Gleichungssystem oder durch ein neuronales Netz ermittelt.

Wird in dem Schritt S6 festgestellt, dass das Kennfeld oder die Kennfelder vollständig sind, also für alle Wertepaare entsprechende Teilvolumenströme oder Temperaturen eingetragen sind, so endet das Verfahren in Schritt S9.

### BEZUGSZEICHENLISTE:

- 1: hydraulisches System
- 2: erste Kupplung
- 3: zweite Kupplung
- 4: dritte Kupplung
- 5: Pumpe
- 6: weitere Pumpe
- 7: Elektromotor
- 8: Saugfilter
- 9: Reservoir
- 10: Ventil
- 11: erster Ausgang
- 12: zweiter Ausgang
- 13: dritter Ausgang
- 14: erster Eingang
- 15: zweiter Eingang
- 16: erste Schaltstellung
- 17: zweite Schaltstellung
- 18: dritte Schaltstellung
- 19: zweite Hydraulikleitung
- 20: erste Hydraulikleitung
- 21: dritte Hydraulikleitung
- 22: Druckbegrenzungsventil
- 23: Blende
- 24: Einlassöffnung
- 25: Bereich
- 26: Ventilteller
- 27: Federelement
- 28: zweite Antriebsmaschine
- 29: Modul
- 30: Drossel
- 31: Vorrichtung
- 32: Adapterelement
- 33: erstes Ende
- 34: zweites Ende

## Patentansprüche

1. Verfahren zum Ermitteln von zumindest einem Volumenstrom in einer Vorrichtung (31) für ein hydraulisches System (1), insbesondere eines Kraftfahrzeugs, wobei die Vorrichtung eine erste Hydraulikleitung (20) aufweist, die mit einer, insbesondere zumindest eine Pumpe (5, 6) aufweisenden, Hydraulikdruckquelle zum Fördern eines flüssigen Mediums aus einem Reservoir (9) einerseits und mit zumindest einer zu kühlenden und/oder zu schmierenden Einrichtung andererseits verbunden ist, wobei der ersten Hydraulikleitung (20) ein Druckbegrenzungsventil (22) zugeordnet ist, das einen Tankanschluss zu dem Reservoir (9) für das flüssige Medium aufweist und die erste Hydraulikleitung (20) mit dem Tankanschluss verbindet, wenn ein Hydraulikdruck in der ersten Hydraulikleitung (20) einen vorgegebenen Grenzwert überschreitet, wobei stromabwärts von dem Druckbegrenzungsventil (22) eine Blende (23) in der ersten Hydraulikleitung (20) angeordnet ist, und wobei stromabwärts von der Blende (23) eine Drossel (30) in der ersten Hydraulikleitung (20) angeordnet oder ausgebildet ist, mit den Schritten:
- Ermitteln einer Temperatur des Mediums in dem Reservoir (9),
- Ermitteln eines durch die Hydraulikdruckquelle geförderten Gesamtvolumenstroms in der ersten Hydraulikleitung (20) in Abhängigkeit von der Temperatur,
- Ermitteln eines durch das Druckbegrenzungsventil (22) in das Reservoir (9) abgegebenen ersten Teilvolumenstroms, und
- Ermitteln eines zweiten Teilvolumenstroms durch die Blende (23) und die Drossel (30) zu der Einrichtung als eine Differenz von Gesamtvolumenstrom und erstem Teilvolumenstrom.

2. Verfahren nach Anspruch 1, **dadurch gekennzeichnet, dass** die Hydraulikdruckquelle zumindest eine Pumpe (5, 6) aufweist, und dass der Gesamtvolumenstrom als Produkt aus einem von der Temperatur abhängigen volumetrischen Wirkungsgrad, einer Antriebsdrehzahl und einem Hubvolumen der Pumpe (5, 6) ermittelt wird.

3. Verfahren nach den Ansprüchen 1 und 2, **dadurch gekennzeichnet, dass** eine Vielzahl an Gesamtvolumenströmen durch eine Vielzahl an Antriebsdrehzahlen vorgegeben werden.

4. Verfahren nach Anspruch 3, **dadurch gekennzeichnet, dass** für eine Vielzahl an Temperaturen und/oder Antriebsdrehzahlen jeweils zulässige Wertebereiche vorgegeben werden.

5. Verfahren nach einem der Ansprüche 2 bis 4, **dadurch gekennzeichnet, dass** die Hydraulikdruckquelle eine zweite Pumpe (6) fluidtechnisch parallel zu der ersten Pumpe (5) aufweist, und dass der Gesamtvolumenstrom als Summe der jeweiligen Produkte aus volumetrischem Wirkungsgrad, Antriebsdrehzahl und Hubvolumen der jeweiligen Pumpe (5,6) ermittelt wird.

6. Verfahren nach einem der vorhergehenden Ansprüche, **dadurch gekennzeichnet, dass** der erste Teilvolumenstrom in Abhängigkeit von einer Veränderung eines Füllstands des Reservoirs (9) ermittelt wird.

7. Verfahren nach einem der vorhergehenden Ansprüche, **dadurch gekennzeichnet, dass** eine Temperatur der Einrichtung in Abhängigkeit von dem zweiten Teilvolumenstrom und einer elektrischen oder mechanischen Leistungsabgabe der Einrichtung ermittelt wird.

8. Computerprogrammprodukt zur Ausführung auf einer Computereinrichtung, **dadurch gekennzeichnet, dass** das Computerprogrammprodukt bei bestimmungsgemäßem Gebrauch ein Verfahren nach einem der vorhergehenden Ansprüche ausführt.

## Claims

1. Method for determining at least one volume flow rate in a device (31) for a hydraulic system (1), in particular of a motor vehicle, wherein the device comprises a first hydraulic line (20) which is connected to a hydraulic pressure source, in particular comprising at least one pump (5, 6), for conveying a liquid medium from a reservoir (9) on the one hand and to at least one device to be cooled and/or lubricated on the other hand, wherein a pressure relief valve (22) is associated with the first hydraulic line (20), which comprises a tank connection to the reservoir (9) for the liquid medium and connects the first hydraulic line (20) to the tank connection when a hydraulic pressure in the first hydraulic line (20) exceeds a predetermined limit value, wherein an aperture (23) is arranged downstream of the pressure relief valve (22) in the first hydraulic line (20), and wherein a throttle (30) is arranged or configured downstream of the aperture (23) in the first hydraulic line (20), with the steps of
- determining a temperature of the medium in the reservoir (9),
- determining a total volume flow rate conveyed by the hydraulic pressure source in the first hydraulic line (20) as a function of the temperature,
- determining a first partial volume flow rate discharged into the reservoir (9) by the pressure relief valve (22), and
- determining a second partial volume flow rate through the aperture (23) and the throttle (30) to the device as a difference between the total volume flow rate and the first partial volume flow rate.

2. Method according to claim 1, **characterised in that** the hydraulic pressure source comprises at least one pump (5, 6), and **in that** the total volume flow rate is determined as a product of a temperature dependent volumetric efficiency, a drive speed and a displacement volume of the pump (5, 6).

3. Method according to claims 1 and 2, **characterised in that** a plurality of total volumetric flow rates are determined based on a plurality of drive speeds.

4. Method according to claim 3, **characterised in that** permissible value ranges are specified in each case for a plurality of temperatures and/or drive speeds.

5. Method according to one of claims 2 to 4, **characterised in that** the hydraulic pressure source comprises a second pump (6) fluidically parallel to the first pump (5), and **in that** the total volume flow rate is determined as the sum of the respective products of volumetric efficiency, drive speed and displacement volume of the respective pump (5, 6).

6. Method according to one of the preceding claims, **characterised in that** the first partial volume flow rate is determined as a function of a change in a filling level of the reservoir (9).

7. Method according to one of the preceding claims, **characterised in that** a temperature of the device is determined as a function of the second partial volume flow rate and an electrical or mechanical power output of the device.

8. Computer program product for execution on a computer device, **characterised in that** the computer program product, when used as intended, executes a method according to one of the preceding claims.

## Revendications

1. Procédé de détermination d'au moins un débit volumique dans un appareil (31) pour un système hydraulique (1), en particulier d'un véhicule automobile, dans lequel l'appareil présente une première conduite hydraulique (20) qui est reliée, d'une part, à une source de pression hydraulique présentant notamment au moins une pompe (5, 6) pour acheminer un fluide liquide à partir d'un réservoir (9) et, d'autre part, à au moins un équipement à refroidir et/ou à lubrifier, dans lequel une soupape de limitation de pression (22) est associée à la première conduite hydraulique (20), laquelle soupape présente un raccord de réservoir vers le réservoir (9) destiné au fluide et relie la première conduite hydraulique (20) au raccord de réservoir lorsqu'une pression hydraulique dans la première conduite hydraulique (20) dépasse une valeur limite prédéfinie, dans lequel un diaphragme (23) est disposé en aval de la soupape de limitation de pression (22) dans la première conduite hydraulique (20), et un dispositif d'étranglement (30) est disposé ou formé en aval du diaphragme (23) dans la première conduite hydraulique (20), comprenant les étapes suivantes :
- la détermination d'une température du fluide dans le réservoir (9),
- la détermination d'un débit volumique total acheminé par la source de pression hydraulique dans la première conduite hydraulique (20) en fonction de la température,
- la détermination d'un premier débit partiel évacué par la soupape de limitation de pression (22) dans le réservoir (9), et
- la détermination d'un second débit partiel à travers le diaphragme (23) et le dispositif d'étranglement (30) vers l'appareil, en tant que différence entre le débit volumique total et le premier débit partiel.

2. Procédé selon la revendication 1, **caractérisé en ce que** la source de pression hydraulique présente au moins une pompe (5, 6), et le débit volumique total est déterminé comme le produit d'un rendement volumique dépendant de la température, d'une vitesse d'entrée et d'une cylindrée de la pompe (5, 6).

3. Procédé selon les revendications 1 et 2, **caractérisé en ce qu'**une multitude de débits volumiques totaux est déterminée par une multitude de vitesses d'entrée.

4. Procédé selon la revendication 3, **caractérisé en ce que** des plages de valeurs admissibles sont définies pour un certain nombre de températures et/ou de vitesses d'entrée.

5. Procédé selon l'une des revendications 2 à 4, **caractérisé en ce que** la source de pression hydraulique présente une seconde pompe (6) montée en parallèle, du point de vue de la technique fluidique, avec la première pompe (5), et le débit volumique total est déterminé comme la somme des produits respectifs du rendement volumique, de la vitesse d'entrée et de la cylindrée de chaque pompe (5, 6).

6. Procédé selon l'une des revendications précédentes, **caractérisé en ce que** le premier débit partiel est déterminé en fonction d'une variation du niveau de remplissage du réservoir (9).

7. Procédé selon l'une des revendications précédentes, **caractérisé en ce qu'**une température de l'appareil est déterminée en fonction du second débit partiel et d'une puissance électrique ou mécanique délivrée par l'appareil.

8. Produit de programme informatique destiné à être exécuté sur un système informatique, **caractérisé en ce que** le produit de programme informatique, lorsqu'il est utilisé conformément à sa destination, met en œuvre un procédé selon l'une des revendications précédentes.
